**Europäisches Patentamt**

**European Patent Office**

**Office européen des brevets**

(19)

(11) Veröffentlichungsnummer: **0 268 118**

**A2**

(12) # EUROPÄISCHE PATENTANMELDUNG

(21) Anmeldenummer: 87115935.6

(51) Int. Cl.⁴: **B01D 53/34**

(22) Anmeldetag: 30.10.87

(30) Priorität: 15.11.86 DE 3639112

(43) Veröffentlichungstag der Anmeldung:
25.05.88 Patentblatt 88/21

(84) Benannte Vertragsstaaten:
AT BE CH DE GB IT LI NL

(71) Anmelder: Rheinische Braunkohlenwerke AG.
Stüttgenweg 2
D-5000 Köln 41(DE)

(72) Erfinder: Ritter, Günter, Dr.-Ing.
Goethestrasse 29
D-5040 Brühl(DE)
Erfinder: Asmuth, Peter, Dr.-Ing.
St.-Peter-Strasse 10
D-4040 Neuss 21(DE)
Erfinder: Raible, Ludwig, Dr.
Grüner Weg 1
D-5012 Bedburg(DE)

(74) Vertreter: Koepsell, Helmut, Dipl.-Ing.
Mittelstrasse 7
D-5000 Köln 1(DE)

(54) **Verfahren zum Entfernen von SOx und NOx aus Rauchgas.**

(57) Beim Entfernen von $SO_x$ und $NO_x$ aus Rauchgas wird so verfahren, daß das Rauchgas, bevor es durch ein SCR-Katalysatorbett geleitet wird, in einem Koksbett vollständig entschwefelt wird. Das entschwefelte und denoxierte Rauchgas kann durch ein Koksbett geleitet werden, in welchem das im SCR-Katalysatorbett nicht umgesetzte Ammoniak aus dem Rauchgas entfernt wird.

EP 0 268 118 A2

## Verfahren zum Entfernen von SO$_x$ und NO$_x$

Die Erfindung betrifft ein Verfahren zum Entfernen von SO$_x$ und NO$_x$ aus Rauchgas, bei dem letzteres zunächst durch eine Entschwefelungsanlage, ggf. durch eine Anlage zur Entstaubung und, nach Zufuhr von Ammoniak, durch ein SCR-Katalysatorbett zur Reduktion wenigstens eines Teils der im Rauchgas enthaltenen Stickoxide hindurchgeführt wird.

Dieses Verfahren ist z. B. für das Reinigen von Rauchgasen aus mit fossilen Brennstoffen betriebenen Kraftwerken geeignet. Es wird heute allgemein angestrebt, daß derartige Rauchgase, wenn sie in die Atmosphäre eintreten, kein oder nur wenig SO$_x$ bzw. NO$_x$ enthalten.

Zur Verringerung der Emission an Stickoxiden wird überwiegend die katalytische Reduktion des NO$_x$ mit Ammoniak zu Stickstoff verwendet. Hierfür gibt es mehrere bekannte Verfahren. Bei der SCR-Technik (SCR = "Selective Catalytic Reduktion") werden Katalysatoren unterschiedlicher Zusammensetzung, beispielsweise aus Keramik oder keramischem Material und/oder Metall/Metalloxid in Form beispielsweise von Wabenkörpern und Platten eingesetzt. Die Temperaturen, bei denen solche SCR-Katalysatoren eingesetzt werden, liegen im allgemeinen bei etwa 300° C.

Aus der DE-OS 32 32 543 ist ein Verfahren zum Entfernen von Schwefel-und Stickstoffoxiden aus Rauchgas bekannt, bei welchem das Rauchgas zum Entfernen der Schwefeloxide durch ein aus einem kohlehaltigen Adsorptionsmittel bestehendes Bett geleitet und zum Entfernen der Stiffstoffoxide Ammoniak zugegeben wird. Dabei werden mindestens zwei kohlehaltige Adsorptionsbetten verwendet, von denen das eine als Katalysator beim Entfernen der Stickstoffoxide dient. Das andere kohlehaltige Adsorptionsbett dient zum Entfernen der Schwefeloxide und des Ammoniaks aus dem Rauchgas, welches in dem Katalysatorbett nicht zum Umsetzen der Stickoxide verbraucht worden war.

Die Erfindung geht aus von einem Verfahren der einleitend beschriebenen Art, bei welchem zum Entfernen der Stickoxide ein SCR-Katalysatorbett verwendet wird. Dieses hat im Vergleich mit der Verwendung eines Bettes mit kohlenstoffhaltigem Katalysatormaterial, beispielsweise Koks, den Vorteil einer längeren Standzeit, wenngleich die Aktivität eines SCR-Katalysators im Laufe der Zeit auch eine gewisse Verringerung erfährt. Voraussetzung für die längere Standzeit ist allerdings, daß das den SCR-Katalysator durchströmende Rauchgas keine Bestandteile enthält, die sich auf dem Katalysator ablagern oder in anderer Weise die Wirksamkeit des Katalysators so stark beeinträchtigen, daß dieser nach kürzerer Zeit ausgewechselt oder aufgearbeitet werden muß.

Demzufolge liegt der Erfindung die Aufgabe zugrunde, das Verfahren der einleitend beschriebenen Art so weiterzuentwickeln, daß Beeinträchtigungen des SCR-Katalysatorbettes, die zu einer Verkürzung seiner an sich möglichen Standzeit führen, weitgehend vermieden werden. Ferner soll die Möglichkeit bestehen, bei abnehmender Aktivität des SCR-Katalysators dies durch höhere Ammoniak-Zugaben zu kompensieren, ohne daß im gereinigten Rauchgas ein Ammoniak-Restgehalt verbleibt, der zu Beeinträchtigungen der Umwelt führen könnte.

Zur Lösung dieser Aufgabe schlägt die Erfindung vor, daß in der Anlage zur Entschwefelung das Rauchgas durch ein Koksbett hindurchgeführt wird.

Das Vorhandensein dieses Koksbettes hat zur Folge, daß das in das SCR-Katalysatorbett eintretende Rauchgas praktisch schwefelfrei ist. Mithin wird die sonst durch die Ammoniakzugabe unvermeidbare Bildung von Ammoniumsulfat (NH$_4$)$_2$ SO$_4$ und Ammoniumhydrogensulfat (NH$_4$)H$_2$ SO$_4$ vermieden. Das Vorhandensein von Ammoniumsulfat bzw. Ammoniumhydrogensulfat ist insbesondere deshalb unerwünscht, weil es in der Denoxierungsstufe, also im SCR-Katalysatorbett, jedenfalls dann zu Ablagerungen führt, wenn in der Denoxierungsstufe bestimmte Mindesttemperaturen unterschritten werden. Diese Ablagerungen aus Ammoniumsulfat bzw. Ammoniumhydrogensulfat beeinträchtigen die Wirksamkeit des SCR-Katalysators, da die Ablagerungen zwangsläufig die wirksam Oberfläche des Katalysators verringern. Das zur Aufrechterhaltung einer ausreichend großen katalytisch wirksamen Oberfläche erforderliche Reinigen des SCR-Katalysators bedingt zusätzliche Aufwendungen. Außerdem entsteht dabei ammoniumhaltiges Wasser, dessen Beseitigung, da es die Umwelt belastet, ebenfalls mit zusätzlichen Kosten verbunden ist. Das Koksbett hat weiterhin den Vorteil, daß es als Filter wirkt, welcher Schwermetalle und Stäube zurückhält, die ebenfalls die Wirksamkeit des SCR-Katalysators stark reduzieren können.

Es ist zwar gemäß einem weiteren Vorschlag der Erfindung möglich, das aus dem Koksbett für die Entschwefelung kommende Gas durch einen Wärmetauscher zu führen, in welchem es vor Eintreten in das SCR-Katalystorbett für die zumindest teilweise Reduktion der im Rauchgas enthaltenen Stickoxide erwärmt wird. Diese Erwärmung, die auch das Ablaufen des Reduktionsvorganges im SCR-Katalysatorbett begünstigt, kann soweit geführt werden, daß zur Erzielung einer zusätzlichen Sicherheit gegen Ablagerungen Temperaturen erreicht werden, bei denen Ablagerungen mit Sicherheit vermieden werden. Dies wiederum macht jedoch einen zusätzlichen Energieaufwand erforderlich. Außerdem würde eine derartige zusätzliche Maßnahme das Auftreten von Ablagerungen im Wärmetauscher nicht vermeiden, der dann ebenfalls in bestimmten Zeitabständen gereinigt werden müßte. Ein wesentlicher Vorteil der Erfindung besteht somit darin, auf die Erwärmung des Gases zur Vermeidung von Niederschlägen nicht angewiesen zu sein.

Als besonders vorteilhaft hat sich eine Verfahrensführung herausgestellt, bei welcher das gereinigte, nicht umgesetztes Ammoniak enthaltende Rauchgas nach Passieren des SCR-Katalystorbettes zum Entfernen dieses Ammoniaks durch ein Bett geleitet wird, welches Koks enthält, der vorher zur Adsorption zumindest eines Teils des im Rauchgas enthaltenen Schwefels verwendet worden war. Eine derartige Betriebsweise, die an sich aus der DE-OS 32 32 543 bekannt ist, hat im Zusammenhang mit dem SCR-Katalysatorbett den Vorteil, daß die im Laufe der Zeit abnehmende Aktivität des SCR-Katalysators durch höhere Ammoniak-Zugabe ausgeglichen werden kann mit dem Ergebnis, daß so deutlich längere Standzeiten des SCR-Katalysators erreicht werden können. Die Verlängerung der Standzeit kann beispielsweise in der Größenordnung einer Verdoppelung derselben liegen. Wenn die normale Standzeit beispielsweise fünf Jahre beträgt, kann bei Anwendung der Lehre gemäß der Erfindung eine Standzeit von zehn Jahren erreicht werden, wobei die etwa nach fünf Jahren eingetretene Verringerung der Aktivität des Katalysators durch höhere $NH_3$-Zugaben ausgeglichen wird. Letztere führen selbstverständlich auch zu einer größeren Mengen an unverbrauchtem Ammoniak in den die Denoxierungsstufe, also das SCR-Katalysatorbett verlassenden Rauchgasen. Dies kann jedoch ohne weiteres in Kauf genommen werden, da die erforderlichen Ammoniakmengen ohnehin gering sind und das nicht umgesetzte $NH_3$ in dem nachgeschalteten Koksbett soweit entfernt wird, daß es die Umwelt nicht beeinträchtigt.

Im übrigen kann das Koksbett, welches vom Rauchgas vor dessen Eintritt in die Denoxierungsstufe durchströmt wird, lediglich der Nachentschwefelung dienen, nachdem der größere Teil des Schwefels bereits in einer diesem Koksbett vorgeschalteten Hauptentschwefelungsstufe entfernt worden war.

Letzere kann mit basischen, calciumhaltigen Sorbentien für die Entschwefelung arbeiten. Hierzu gehören die bekannten, hinter der Rauchgasentstaubung angeordneten Naßverfahren, bei welchen das $SO_x$ mittels kalk-oder kalksteinhaltiger Waschlösungen abgeschieden und als Bestandteil von Gips aus dem Rauchgasreinigungsprozeß herausgeführt wird. Bei den trockenen oder halbtrockenen Verfahren wird das Sorptionsmittel als Lösung, Suspension oder trocken in den Rauchgasstrom eingedüst und nach der $SO_x$-Einbindung in trockener Form in einem Filter abgetrennt. Eine andere bekannte Möglichkeit sieht vor, bereits dem Brennstoff Kalk/Kalkstein zuzufügen und dadurch eine direkte Einbindung des Schweifels während der Verbrennung zu erreichen.

Es ist aber auch möglich, daß der gesamte im Rauchgas befindliche Schwefel in diesem Koksbett entfernt ist, dieses also die einzige Entschwefelungsstufe darstellt.

Als besonders günstig hat sich die Verwendung von Herdofenkoks aus Braunkohle als Adsorptionsmittel für den Schwefel und das nicht umgesetzte Ammoniak herausgestellt. Das Verfahren zur Herstellung von Braunkohlenkoks im Herdofen ist ausführlich beschrieben in den nachfolgend genannten Veröffentlichungen:

H. B. Koenigs: "Feinkokserzeugung aus Braunkohle" Energiewirtschaftliche Tagesfragen, 27. Jg. 1977, Heft 8/9, S. 569 - 599 und

E. Scherrer: "Herstellung von Braunkohlenkoks im Salem-Lurgi-Herdofen", Braunkohle, Heft 7, Juli 1981, S. 242 -246 und

D. Böcker: "Edle Körner" Energie, Jg. 35, Heft 3, 1983, S. 35 - 37.

In diesen Veröffentlichungen ist über die Herstellung von Herdofenkoks aus Braunkohle soviel mitgeteilt, wie zum besseren Verständnis des Hintergrundes der vorliegenden Erfindung erforderlich ist.

Herdofenkok ist billig, so daß der mit $SO_x$ und $NH_3$ beladene Koks zurückgeführt und in dem Kessel, dessen Rauchgase gereinigt werden, zusammen mit anderen Brennstoffen verbrannt werden kann. Die dabei freigesetzten $SO_x$-Mengen sind gering. Sie werden in der Entschwefelungsanlage abgeschieden. Eine zusätzliche Beladung der Rauchgase mit $NO_x$ aufgrund der Beladung des verbrannten Kokses mit in der Denox-Stufe nicht umgesetztem Ammoniak fällt nicht ins Gewicht, da einerseits die absoluten Mengen an abzuscheidendem, in der Denox-Stufe nicht umgesetztem Ammoniak gering sind und andererseits das bei der Abscheidung auf dem Koksbett gebildete Ammoniumsulfat $(NH_4)_2SO_4$ bzw. Ammoniumhydrogensulfat $(NH_4)H_2SO_4$ eine günstige Brennstoff-Stickstoff-Konversionsrate aufweist. D. h., daß es sich nach Durchgang durch die Feuerung nur zu einem geringen Teil als $NO_x$ im Rauchgas wiederfindet.

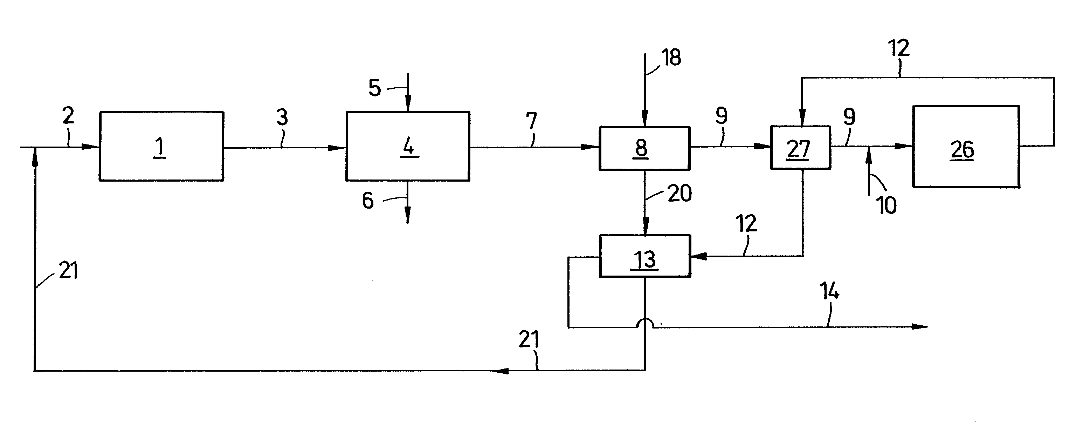

In der Zeichnung ist das Fließschema eines Ausführungsbeispiels des Verfahrens gemäß der Erfindung dargestellt.

In einem Kraftwerkskessel 1 werden fossile Brennstoffe 2, beispielsweise Stein-oder Braunkohle verbrannt. Das dabei entstehende Rauchgas 3 wird einer Rauchgasentschwefelungsanlage 4 zugeführt, in welcher das in dem Rauchgas 3 mitgeführte Schwefeloxid $SO_x$ mit Hilfe von Kalk 5, $Ca(OH)_2$, in Gips 6, $CaSO_4$, umgewandelt wird. Bei dieser Umwandlung wird der größte Teil des im Rauchgas 3 enthaltenen Schwefeloxids entfernt. Anstelle der Umwandlung des Schwefeloxids in Gips kann in der Entschwefelungsanlage 4 auch ein anderes bekanntes Verfahren zur Entschwefelung, beispielsweise das Walther-Verfahren, angewendet werden.

Das entstaubte innerhalb der Rauchentschwefelungsanlage 4 vorentschwefelte Rauchgas 7 wird durch ein Koksbett 8 geführt, in welchem der Restschwefel aus dem Rauchgas 7 dadurch entfernt wird, daß die Schwefeloxide auf der Oberfläche der Körner des Koksbettes 8 adsorbiert werden. Das schwefelfreie Rauchgas 9 wird zunächst durch einen Gasvorwärmer 27 geleitet, in welchem seine Temperatur auf etwa 300° C erhöht wird. Danach wird dem Rauchgas 9 gasförmiges Ammoniak($NH_3$) 10 zugegeben, bevor das Rauchgas durch einen SCR-Festbett-Reaktor 26 geführt wird, in welchem die Entstickung durchgeführt, also $NO_x$ aus dem Rauchgas gemäß folgender Hauptreaktion entfernt wird:

$$4 NO + 4NH_3 + O_2 = 4 N_2 + 6H_2O .$$

Im SCR-Festbettreaktor 26 befinden sich beispielsweise Formkörper aus Keramik oder Körper, die keramisches Material mit Beimengungen katalytisch aktiver Komponenten enthalten und/oder Körper aus Metall bzw. Metalloxid, welche vom Rauchgas 9 umspült werden. Dabei findet die Reduktion des im Rauchgas 9 enthaltenen Stickoxids zu Stickstoff statt.

Das den SCR-Festbettreaktor 26 verlassende entschwefelte und entstickte Rauchgas 12 wird zunächt durch den Wärmetauscher 27 geführt, in welchem es seine Wärme an das von der Entschwefelungsstufe 8 kommende Rauchgas abgibt. Im allgemeinen wird es erforderlich sein, im Wärmetauscher 27 noch zusätzlich Wärme von außen zuzuführen, um die zwangsläufig entstehenden Wärmeverluste zu decken.

Das aus dem Wärmetauscher 27 kommende abgekühlte Gas 12 wird dann durch ein Koksbett 13 geleitet, in welchem das überschüssige Ammoniak, welches im SCR-Festbettreaktor 26 nicht umgesetzt worden war, adsorbiert und somit aus dem Rauchgas 12 entfernt. Das gereinigte Rauchgas 14 kann in die Atmosphäre geführt werden.

Dem Koksbett 8 für die Entschwefelung des Rauchgases 7 wird unbeladener Koks 18 zugeführt. Der beladene Koks 20 wird dem Koksbett 13 zugeführt, in welchem die Abscheidung des überschüssigen Ammoniaks aus dem Rauchgas 12 erfolgt. Die beiden Betten 8 und 13 können in Form eines Wanderbettes ausgebildet sein, dessen einer Teil vom zu entschwefelnden Rauchgas 7 und dessen anderer Teil vom entschwefelten und denoxierten Rauchgas 12 zum Entfernen des nicht umgesetzten $NH_3$ durchströmt wird. Der beladene Koks 21 wird in die Feuerung 1 zurückgeführt und dort verbrannt.

## Ansprüche

1. Verfahren zum Entfernen von $SO_x$ und $NO_x$ aus Rauchgas, bei dem das Rauchgas zunächst durch eine Entschwefelungsanlage, ggf. durch eine Anlage zur Entstaubung, und, nach Zufuhr von Ammoniak, durch ein SCR-Katalysatorbett zur Reduktion wenigstens eines Teils der im Rauchgas enthaltenen Stickoxide hindurchgeführt wird, dadurch gekennzeichnet, daß in der Anlage zur Entschwefelung das Rauchgas durch ein Koksbett hindurchgeführt wird.

2. Verfahren nach Anspruch 1, dadurch gekennzeichnet, daß das aus dem Koksbett für die Entschwefelung kommende Gas durch einen Wärmetauscher geführt wird, in welchem das Gas vor Eintreten in das SCR-Katalysatorbett für die zumindest teilweise Reduktion der im Rauchgas enthaltenen Stickoxide erwärmt wird.

3. Verfahren nach Anspruch 1, dadurch gekennzeichnet, daß das gereinigte, nicht umgesetztes Ammoniak enthaltende Rauchgas nach Passieren des SCR-Katalysatorbettes zum Entfernen dieses Ammoniaks durch ein Bett geleitet wird, welches Koks enthält, welcher vorher zur Adsorption zumindest eines Teils des im Rauchgas enthaltenen Schwefels verwendet worden war.

4. Verfahren nach Anspruch 1, dadurch gekennzeichnet, daß in dem Koksbett lediglich eine Nachentschwefelung des zuvor in einer Hauptentschwefelungsanlage vom größten Teil des $SO_x$ befreiten Rauchgases stattfindet.

5. Verfahren nach Anspruch 1, dadurch gekennzeichnet, daß als Koks für das der Entschwefelung dienende Bett aus Braunkohle hergestellter Herdofenkoks verwendet wird.

0 268 118